# EUROPEAN PATENT APPLICATION

(11) **EP 4 148 032 A1**
(43) Date of publication of application: **15.03.2023**
(21) Application number: 21195792.3
(22) Date of filing: 09.09.2021
(51) Int. Cl.: C05B 7/00, C05C 9/00, C05D 3/00, C05D 5/00, C05D 9/02, C05G 3/90, C05G 5/35

(54) **UREA-BASED COMPOSITION COATED WITH AN INORGANIC ACID**

(71) Applicant: Yara International ASA, 0277 Oslo (NO)
(72) Inventor: Van de Walle, Tom, 9180 Moerbeke-Waas (BE)
(74) Representative: De Clercq & Partners

(57) **Abstract**

The present application provides a solid, particulate composition comprising a core comprising urea, and a layer at least partially covering the core, wherein the layer comprises an inorganic acid, a compound selected from the group consisting of oxides, carbonates, hydroxides, acetates and any mixture thereof, and a urease inhibitor of the type triphosphoric triamide. The present application also provides a method for preparing said solid, particulate composition and the use of said solid, particulate composition as a fertilizer.

## Description

### Field of the invention

The present invention is related to the field of urea-based compositions, in particular urea-based fertilizer compositions.

### Background of the invention

Urea is the most common nitrogen-containing fertilizer used today. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is the basic constituent for any living system as a constituent of protein.

Plants cannot absorb urea directly. Instead, urea needs to be broken down to ammonium and nitrate ions to be used by plants. This transformation occurs in the soil and is catalyzed by several types of enzymes, in particular urease enzymes. Ureases are found in numerous bacteria, fungi, algae, plants and some invertebrates, as well as in soils, as a soil enzyme. Urease enzymes convert urea molecules into ammonia and carbon dioxide. Urease activity tends to increase the pH of its environment as the ammonia is dissolved into the water in the soil. Ammonia molecules then reacts with an acidic compound present in the soil to form ammonium ions. Ammonium ions are later oxidized into nitrate ions by other enzymes, and the plant can easily absorb and utilize the nitrate ions.

However, ammonia can also be released into the atmosphere, before reacting to yield ammonium ions, thus becoming unavailable for the plant root system, a process called ammonia volatilization. Up to 50 weight% of nitrogen can be lost as a result of the volatilization of ammonia, all depending on the soil type, water content, pH, climate conditions, etc.

The availability of nitrogen, originating from urea, to the root system of plants can be improved by combining (*i*.*e*. by incorporation or addition) a urease inhibitor with a urea-containing fertilizer. Urease inhibitors are compounds that are capable of temporarily reducing the activity of the urease enzymes and slow down the rate at which urea is transformed into ammonia and carbon dioxide. This slow down reduces the concentration of ammonia in the soil, allowing the ammonia generated to transform into ammonium, thus reducing the amount of volatilized ammonia. There are many compounds that can inhibit urease, but only a few that are non-toxic to plants, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in said patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

However, urease inhibitors of the type phosphoric triamide, in particular nBTPT, are not very stable in urea-based compositions comprising acidic components, such as ammonium salts. It has been known for some years that chemical stabilizers can be added to urea-based compositions to increase the stability of nBTPT. For example, WO2017042194A1 (Yara, 2017) discloses the addition of metal oxides, or metal carbonates, to compositions comprising urea and ammonium sulphate to increase the stability of nBTPT during storage. In these compositions, the urease inhibitor is present in the core of the particles or as a coating, so it is in close contact with ammonium sulphate.

There is still a need to further improve the stability of urease inhibitors of the type phosphoric triamide in urea-based compositions.

### Summary of the invention

It was found that it was possible to prepare urea-based particles with an outer layer comprising a reaction product of an inorganic acid, such as urea sulfate, with a compound selected from the group consisting of oxides, carbonates, hydroxides, acetates and any mixture thereof, and a urease inhibitor of the type phosphoric triamide.

In a first aspect, the present invention is related to a solid, particulate composition comprising a core comprising urea, and a solid layer at least partially covering the core, wherein the layer comprises a reaction product of an inorganic acid with a compound selected from the group consisting of oxides, carbonates, hydroxides, acetates and any mixture thereof, and a urease inhibitor of the type triphosphoric triamide.

In another aspect, the present invention is related to a method for producing a solid, particulate composition.

In another aspect, the present invention is related to the use of the solid, particulate composition according to the present invention as a fertilizer.

### Brief description of the figures

The following description of the figure of a specific embodiment of a system according to the present disclosure is only given by way of example and is not intended to limit the present explanation, its application or use. In the figure, identical reference numerals refer to the same or similar parts and features.

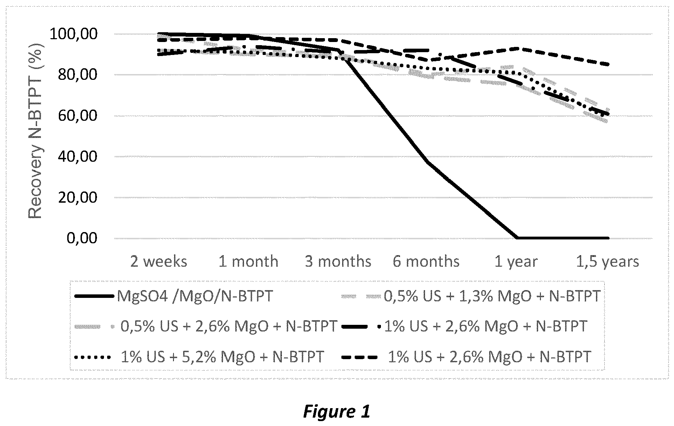

Figure 1 shows the amount of *N*-(*n*-butyl) thiophosphoric triamide recovered in urea-based particles comprising N-(n-butyl) thiophosphoric triamide after storage at ambient temperature and humidity.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

The term "metal" as used herein refers to any chemical element categorized as metal in the periodic classification. The term "metal" comprises the alkali metals, the alkaline-earth metals, the transition metals, the lanthanides and actinides. For example, metal elements include lithium, beryllium, sodium, magnesium, aluminium, potassium, calcium, manganese, iron, cobalt, nickel, copper, and zinc.

The term "solid, particulate composition" refers to a composition of solid particles. The solid particles of the composition have essentially all the same content of components.

In a first aspect, the present invention is related to a solid, particulate composition comprising a core comprising urea, and a solid layer at least partially covering the core, wherein the layer comprises a reaction product of an inorganic acid with a compound selected from the group consisting of oxides, carbonates, hydroxides, acetates and any mixture thereof, and a urease inhibitor of the type triphosphoric triamide.

To further improve the stability of urease inhibitor in urea-containing compositions, in particular sulphur- and urea-containing compositions, it was envisioned to create a barrier between the urease inhibitor and the core of the particle that may comprise compounds that destabilize the urea inhibitors.

In WO2014033160 (Yara 2014), a treatment method of urea particles is disclosed: urea particles are treated with a mineral acid that reacts with urea, and a solid base is added to the acidified particle. The present inventors realized that this treatment creates a barrier from the urea-containing core and that urease inhibitors of the type phosphoric triamide could be added to the particles disclosed in WO2014033160.

In one embodiment, the core comprises from 50 to 99 weight%, from 60 to 99 weight%, from 70 to 99 weight%, from 80 to 99 weight%, from 50 to 95 weight%, from 60 to 95 weight%, from 70 to 95 weight%, or from 80 to 95 weight% of urea.

In one embodiment, the core further comprises a component selected from the group consisting of an ammonium salt, a nitrate salt, a phosphate salt, a potassium salt and mixtures thereof. In one embodiment, the core further comprises from 1.0 to 50 weight%, from 5.0 to 50 weight%, from 10 to 50 weight%, from 1.0 to 40 weight%, 1.0 to 30 weight%, from 5.0 to 30 weight%, from 10 to 30 weight%, or from 1.0 to 20 weight% of a component selected from the group consisting of an ammonium salt, a nitrate salt, a phosphate salt, a potassium salt and mixtures thereof.

It is common in the fertilizer industry to prepare solid particles comprising two or more nutrients, or two or more different sources of nutrients. The ammonium salt may be ammonium nitrate or an ammonium phosphate, mono-ammonium phosphate or di-ammonium phosphate. The nitrate salt may be potassium nitrate or calcium nitrate. The phosphate salt may be an ammonium phosphate. The potassium salt may be potassium chloride or potassium sulfate.

For example, the core particles may comprise urea ammonium nitrate, which is a mixture of urea and the salt ammonium nitrate. Such a particle provides only one type of nutrient, nitrogen, to crops but under three different forms. The three forms, urea, ammonium and nitrate, are absorbed at different rates by crops (nitrate>ammonium>urea), which gives the particle a long-lasting action. In one embodiment, the core comprises urea and ammonium sulfate.

The core particles may be prepared by any method known in the field. An important method used in the fertilizer industry is to prepare a melt comprising the desired components and solidify the melt into solid, particles. The solidification may be performed in a granulator, such as a drum granulator, or a fluidized bed granulator, a prilling tower, a spherodizer, or a pugmill.

In one embodiment, the inorganic acid, is selected from the group consisting of nitric acid, sulphuric acid, phosphoric acid, urea sulphate, urea phosphate, and any mixture thereof.
From WO2014033160, it is known that nitric acid, phosphoric acid and sulphuric acid are suitable to be used on urea-containing particles. It was also found that urea sulphate can also be applied to urea-containing core particles. Urea sulphate is a compound comprising one or two molecules of urea and one molecule sulphuric acid. Urea sulphate may be prepared by mixing urea and sulphuric acid, optionally in the presence of water. Despite the presence of urea, urea sulphate is still a strong acid, with a pKa of about 1.5. In one embodiment, urea sulphate has a molar ratio of urea to sulfuric acid of from 1:1 to 2:1.

In one embodiment, the core comprises a source of secondary nutrient and/or a source of micronutrients. In agriculture, secondary nutrients are magnesium, calcium and sulfur; and micronutrients are boron, copper, manganese, molybdenum, and zinc. Suitable sources of each nutrient are known in the art.

In one embodiment, the solid, particulate composition comprises from 0.1 to 2.0 weight%, from 0.3 to 2.0 weight%, or from 0.3 to 1.5 weight% of the inorganic acid, in particular of urea sulphate. It was found that a content of from 0.1 to 2.0 weight% of the inorganic acid was suitable for the present invention. The inorganic acid should cover as much as possible of the core to create an efficient barrier between the core and the urease inhibitor. When more acid is added to the particle, the layer thereof becomes thicker. It was found that it was not necessary to use more than 2.0 weight% of the inorganic acid, as this would just reduce the weight% of the core in the final composition and reduce the nutrient content of the final particle. In one embodiment, the solid, particulate composition comprises 0.5 weight% or 1.0 weight% of urea sulfate.

When applied on the urea-containing core, the inorganic acid, partially reacts with the core, in particular with the urea comprised in the core, and creates an acidic layer on the core. This acidic layer comprises one or more products from the reaction of the inorganic acid with the compounds comprised in the core, and some unreacted inorganic acid. The core may have a surface that is quite smooth and regular depending on its production method. It was found that particles such as a compound selected from the group consisting of oxides, carbonates, hydroxides, acetates and any mixture thereof, may not adhere very well to the naked core. However, the addition of the inorganic acid creates irregularities on the surface which increases the adherence of other solid particles added to the particle, such as the compound selected from the group consisting of oxides, carbonates, hydroxides, acetates and any mixture thereof and the urease inhibitor.

The inorganic acid may be applied using standard techniques in the field. For example, the core particles may be placed in a rotating drum and the inorganic acid may be added in the drum.
It may be an advantage that the inorganic acid covers as much as possible the surface of the core particle. In one embodiment, the inorganic acid covers at least 50%, at least 60%, at least 70%, at least 80%, at least 90% or at least 95% of the surface of the core.

It would not be safe to manipulate such acidified particles, so a basic component is added to the particle to neutralize the acidic layer. From WO2014033160, it is known that metal salts are well suitable for this process.

The compound selected from the group consisting of oxides, carbonates, hydroxides, acetates and any mixture thereof, reacts with the inorganic acid that had not reacted with the compounds comprised in the core, and may also react with the products formed by the reaction of the inorganic acid with the compounds comprised in the core. The products of these reactions may be sulfate salts, phosphate salts, or nitrate salts depending on the inorganic acid selected. The reaction products create a solid layer, continuous or discontinuous, around the urea-containing core.

In one embodiment, the compound selected from the group consisting of oxides, carbonates, hydroxides, acetates and any mixture thereof, is selected from the group consisting of metal oxides, metal carbonates, metal hydroxides, metal acetates and any mixture thereof. Metal oxides, carbonates, hydroxides, acetates are compounds that react with strong acids, such as nitric acid, sulphuric acid, phosphoric acid, urea sulphate, and urea phosphate, and raise the pH of the surface of the particles, so that they are safe to handle. Another benefit of that process is that the metals used are usually nutrients required by the plants, and so adding the metal compounds may also increase the agronomical value of the particle.

In one embodiment, the compound selected from the group consisting of oxides, carbonates, hydroxides, acetates and any mixture thereof, is selected from the group consisting of zinc oxide, zinc carbonate, zinc hydroxide, zinc acetate, calcium oxide, calcium carbonate, calcium hydroxide, calcium acetate, magnesium oxide, magnesium carbonate, magnesium hydroxide, magnesium acetate, and any mixture thereof. Zinc, magnesium and calcium are secondary and micronutrients required by plants. They are commercially available in large quantities and in different forms and formulas. From WO2017042194A1, it is known that magnesium oxide, calcium oxide, calcium carbonate, and zinc oxide are particularly efficient at stabilizing urease inhibitors of the type phosphoric triamide.

In one embodiment, the solid, particulate composition comprises from 0.01 to 5.0 weight%, from 0.01 to 4.0 weight%, from 0.1 to 5.0 weight%, from 0.1 to 4.0 weight% of the compound selected from the group consisting of oxides, carbonates, hydroxides, acetates and any mixture thereof.

In one embodiment, the layer at least partially covering the core further comprises magnesium sulphate. Magnesium sulphate can also reduce the decomposition rate of urease inhibitors of the type phosphoric triamide, so it may be added to the layer of the solid, particulate composition. Magnesium sulphate can also be found in the layer covering the core, as a result of the reaction between the inorganic acid and the compound selected from the group consisting of oxides, carbonates, hydroxides, acetates and any mixture thereof. For example, if the inorganic acid is sulphuric acid or urea sulphate, and the inorganic compound is any one of magnesium oxide, magnesium hydroxide, magnesium carbonate or magnesium hydroxide, the solid, particulate composition will contain magnesium sulphate due to the reaction of the inorganic acid with one of the magnesium compounds cited above.

In one embodiment, the solid, particulate composition comprises from 0.001 to 1.0 weight%, from 0.001 to 0.5 weight%, from 0.01 to 1.0 weight%, from 0.02 to 1.0 weight%, from 0.03 to 1.0 weight%, from 0.01 to 0.5 weight%, from 0.02 to 0.5 weight%, or from 0.03 to 0.5 weight% of the urease inhibitor of the type phosphoric triamide. The amount of urease inhibitor may vary on different factors: local regulations may require urea-containing fertilizer to contain a minimum amount and/or a maximum amount, if the fertilizer is meant to be stored for a long period, or if one wants to delay the transformation of urea into ammonia as much as possible in the soil, then more urease inhibitor should be used. It was found that a weight content between 0.01 and 0.5 weight% of urease inhibitor of the type phosphoric triamide was suitable in a majority of cases.

In one embodiment, the urease inhibitor of the type phosphoric triamide is a solid, in particular a powder. It may be preferred to use a urease inhibitor in a solid form, such as a powder, as opposed to a solution or suspension in water or solvent. A solid urease inhibitor would stick to the surface of the particle and not modify substantially it, whereas a solution might react with the particle, for example solubilize either the core particle, the inorganic or the basic component.

In one embodiment, the urease inhibitor is a compound of formula: 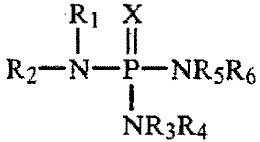 wherein:
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
R₃, R₄, R₅ and R₆ are individually hydrogen or alkyl having 1 to 6 carbon atoms.

In one embodiment, the urease inhibitor is N-(n-butyl) thiophosphoric triamide (nBTPT) and/or N-(2-nitrophenyl) phosphoric triamide (2-NPT).

In one embodiment, the solid, particulate composition comprises elemental sulphur and/or sulphate ions, in particular ammonium sulphate, in particular from 0.1 to 40 weight% of elemental sulphur and/or sulphate ions. In one embodiment, the core of the solid, particulate composition comprises elemental sulphur and/or sulphate ions, in particular ammonium sulphate, in particular from 0.1 to 40 weight% of elemental sulphur and/or sulphate ions.

Due to intensive farming and the reduction of sulphur emissions in the air by industry and the subsequent supply to the ground via rain, modern agriculture requires sulphur in addition to nitrogen.

Good agricultural practice usually require nitrogen and sulphur in a ratio 10/1 to 5/1 in order to answer to the crop demand, for example 150 kg nitrogen/ha/year and 30 kg sulphur/ha/year.

Lack of sulphur results both in a lower quantity and a lower quality of crops, and sulphur deficiency is often reflected in the content and type of proteins. Sulphur is indeed a major element entering into the chemistry of the cells in molecules such as amino acids (cysteine, methionine, etc.). It is also a catalyst for the photosynthesis and, in some cases, may improve the fixation of atmospheric nitrogen.

Sulphur can been applied to the soil in the form of elemental sulphur, or as compounds such as ammonium sulphate, ammonium bisulphate, thiosulphates, sulphides or gypsum, or in combination with other fertilizer materials such as urea, for example as a physical blend of urea and ammonium sulphate, or as a co-granulated urea and ammonium sulphate material, the latter which is hereinafter called urea ammonium sulphate, abbreviated as UAS.

In one embodiment, the core of solid, particulate composition comprises from 0.1 to 40 weight%, from 1 to 40 weight%, from 5 to 40 weight%, from 10 to 40 weight%, from 0.1 to 30 weight%, from 1 to 30 weight%, from 5 to 30 weight%, from 10 to 30 weight% of ammonium sulphate.

In one embodiment, the core of the solid, particulate composition comprises from 22 to 24 weight% of ammonium sulphate. In one embodiment, the solid, particulate composition comprises from 29 to 31 weight% of ammonium sulphate.

The production of particles comprising urea and optionally elemental sulphur and/or a sulphate salt, such as ammonium salts, is well known in the art. A particle comprising urea and an ammonium salt may be a go-granulated material, i.e. obtained from a melt comprising urea and the ammonium salt that is granulated in a drum, a pan or a fluidized bed. Alternatively, a particle comprising urea and an ammonium salt may be produced by reacting streams of ammonia, sulphuric acid and urea, for example in a pipe reactor.

In one embodiment, the core of the solid, particulate composition is homogeneous. This means that the core of the particles in the solid particulate composition is homogeneous, i.e. that the different components of the core are homogenously distributed within the core. The core may comprise small particles of different sizes and composition, such as small particles of ammonium sulphate in a matrix of urea, but the small particles are equally distributed within the urea.

In one embodiment, the weight ratio of inorganic acid to the compound selected from the group consisting of oxides, carbonates, hydroxides, acetates and any mixture thereof, is from 1:10 to 10:1, in particular 1:10 to 1:1. The weight ratio of inorganic acid to the compound selected from the group consisting of oxides, carbonates, hydroxides, acetates and any mixture thereof, may be adjusted depending on the molecular weight of each component and the desired characteristics of the final product. It may be preferred to have a molar excess of the compound selected from the group consisting of oxides, carbonates, hydroxides, acetates and any mixture thereof, to ensure that the entire acidified layer has been correctly neutralized so that the urease inhibitor is not degraded by the acid.

In one embodiment, the average particle size (dp50) of the solid, particulate composition is between 1.0 and 6.0 mm, preferable between 2.0 and 4.0 mm, most preferably between 3.2 and 3.5 mm, as determined by mesh sieve screening.

In one embodiment, the solid, particulate composition comprises a coating composition, in particular an anti-caking, anti-dusting and/or anti-moisture coating composition. Such coating compositions are well known in the fertilizer industry. They improve one or more properties of the particles, e.g. the particles emit less dust, do not agglomerate together, and/or absorb less moisture, so that the particles tolerate storage and handling, and the quality of the particles is preserved until they are applied in a field.

The coating composition may comprise one or more elements selected from the group consisting of a wax, an oil, an alkylamine, a resin, and a dye.

The coating may be applied on the layer comprising an inorganic acid, a compound selected from the group consisting of oxides, carbonates, hydroxides, acetates and any mixture thereof, and a urease inhibitor of the type triphosphoric triamide.

The solid, particulate composition may also comprise any other nutrients used in agriculture: phosphorus, potassium, calcium, magnesium, sulphur, boron, zinc, magnesium, iron, manganese, copper, molybdenum. In particular the core of the particles may comprise any of the elements cited above.

In another aspect, the present disclosure provides a method for producing a solid, particulate composition. The method comprises the steps of:
a) providing a core particle comprising urea;
b) applying an inorganic acid on the core particle comprising urea provided in step a), thereby obtaining a particle comprising urea and coated with an inorganic acid;
c) applying a compound selected from the group consisting of oxides, carbonates, hydroxides, acetates and any mixture thereof, to the particle obtained in step b);
d) applying a urease inhibitor of the type phosphoric triamide to the particle obtained in step c).
This method may comprise one or more of the embodiments described above for the solid, particulate composition.
This method may be used for producing the solid, particulate composition according to the present disclosure.

The core particle comprises urea, and may also comprise any other nutrients used in agriculture: phosphorus, potassium, calcium, magnesium, sulphur, boron, zinc, magnesium, iron, manganese, copper, molybdenum.
The core particle may also comprise other sources of nitrogen, such as ammonium ions and nitrate ions.

In one embodiment, the core particle comprises an ammonium salt, in particular ammonium sulphate.

An inorganic acid, in particular urea sulphate, is applied on the core particle by any means suitable, for example a rotating drum, or coating drum.

In one embodiment, the method comprises the step of heating the inorganic acid, in particular urea sulphate, up to at least 40 °C before applying it on the particle comprising urea. Heating a liquid decreases its viscosity, thus helping to obtain a more even coating on the core particles. This is particularly helpful when urea sulphate is the inorganic acid, as urea sulphate may crystallize at ambient temperature depending on the exact composition of the urea sulphate, such as the molar ratio of urea to sulphuric acid , and the water content of the urea sulphate. In one embodiment, the inorganic acid, in particular urea sulphate, is heated up to a temperature of from 40 to 80 °C before applying it on the particle comprising urea.

In one embodiment, the particles are mixed or rotated for from 5 to 20 min, from 5 to 15, or from 7 to 15 min after the addition of the inorganic acid to ensure an even distribution on all the particles.

Once the inorganic acid is distributed on the particles, the compound selected from the group consisting of oxides, carbonates, hydroxides, acetates and any mixture thereof, may be added to the acidified particles. The addition may be done in the same apparatus as the acid coating. The compound selected from the group consisting of oxides, carbonates, hydroxides, acetates and any mixture thereof, may be added in solid form, in particular a solid, particular form, such as a powder, or in liquid form, in particular in an aqueous or a non-aqueous, solution or suspension. The non-aqueous medium may be a glycol or glycol derivatives, or an aprotic solvent, such as an oil.

In one embodiment, the particles are mixed or rotated for from 5 to 20 min, from 5 to 15, or from 7 to 15 min after the addition of the compound selected from the group consisting of oxides, carbonates, hydroxides, acetates and any mixture thereof, to ensure an even distribution on all the particles.

Once the compound selected from the group consisting of oxides, carbonates, hydroxides, acetates and any mixture thereof, is evenly distributed on the particles, the urease inhibitor of the type phosphoric triamide, in particular nBTPT or 2-NPT, may be added to the particles. The urease inhibitor may be added in the same manner, in particular in the same apparatus, as the inorganic acid, and the compound selected from the group consisting of oxides, carbonates, hydroxides, acetates and any mixture thereof. The urease inhibitor may be added in solid form, in particular a solid, particular form, such as a powder, or in liquid form, in particular in an aqueous or a non-aqueous, solution or suspension. The non-aqueous medium may be a glycol or glycol derivatives, or an aprotic solvent, such as an oil.

Another benefit of the present method is that the basic compound, i.e. the compound selected from the group consisting of oxides, carbonates, hydroxides, acetates and any mixture thereof, is not in direct contact with the core particle. This is particularly beneficial when the core particle comprises an ammonium salt, such as ammonium sulphate, because the basic compound can react with the ammonium salt leading to the formation of ammonia during storage. With the present method, this reaction is prevented and the product does not emit ammonia during storage, which improves the safety profile of the particles.

In one embodiment, the urease inhibitor is applied in solid, particulate form in step d).

In one embodiment, the method comprises the additional step of coating the particle obtained in step d) with a coating composition, in particular an anti-caking, anti-dusting and/or anti-moisture coating.

In one embodiment, the inorganic acid applied in step b) is selected from the group consisting of nitric acid, sulphuric acid, phosphoric acid, urea sulphate, urea phosphate, and any mixture thereof.

In one embodiment, the solid, particulate obtained in step d) comprises from 0.1 to 2.0 weight% of the inorganic acid, in particular of urea sulphate.

In one embodiment, the inorganic acid is applied in step b) so that the solid, particulate obtained in step d) comprises from 0.1 to 2.0 weight% of the inorganic acid, in particular of urea sulphate.

In one embodiment, the compound selected from the group consisting of oxides, carbonates, hydroxides, acetates and any mixture thereof applied in step c), is selected from the group consisting of zinc oxide, zinc carbonate, zinc hydroxide, zinc acetate, calcium oxide, calcium carbonate, calcium hydroxide, calcium acetate, magnesium oxide, magnesium carbonate, magnesium hydroxide, magnesium acetate, and any mixture thereof.

In one embodiment, the solid, particulate composition obtained in step d) comprises from 0.01 to 5.0 weight% of the compound selected from the group consisting of oxides, carbonates, hydroxides, acetates and any mixture thereof.

In one embodiment, the compound selected from the group consisting of oxides, carbonates, hydroxides, acetates and any mixture thereof, is applied in step c) such that the solid, particulate composition obtained in step d) comprises from 0.01 to 5.0 weight% of the compound selected from the group consisting of oxides, carbonates, hydroxides, acetates and any mixture thereof.

In one embodiment, the solid, particulate composition obtained in step d) comprises from 0.001 to 1.0 weight% of the urease inhibitor of the type phosphoric triamide.

In one embodiment, the urease inhibitor applied in step d) is a compound of formula : 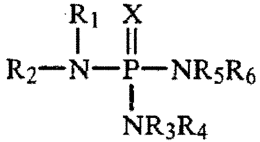 wherein :
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and R₃, R₄, R₅ and R₆ are individually hydrogen or alkyl having 1 to 6 carbon atoms, in particular wherein the urease inhibitor is N-(n-butyl) thiophosphoric triamide.

In one embodiment, the particle provided in step a) comprises elemental sulphur and/or sulphate ions, in particular ammonium sulphate, in particular from 0.1 to 40 weight% of elemental sulphur and/or sulphate ions.

In one embodiment, the weight ratio of inorganic acid to the compound selected from the group consisting of oxides, carbonates, hydroxides, acetates and any mixture thereof, is from 1:10 to 10:1, in particular 1:10 to 1:1.

In another aspect, the present invention is related to the use of the solid, particulate composition according to the present invention as a fertilizer. Urea-containing compositions are well known to be used as fertilizer. Urea provide nitrogen to crops which is a primary nutrient required for optimal growth.

### Example 1

Urea sulfate (US) was prepared by mixing 26 g of urea granules with 23 mL of sulphuric acid (96%, density = 1.84), which corresponds to an equimolar ratio. Homogeneous particles of fertilizers comprising 23 weight% of ammonium sulphate and 77 weight% of urea (YaraVera Amidas) were coated in a rotating drum with 0.5 weight% or 1 weight% of the urea sulfate prepared as above, the urea sulfate being pre-heated to 40-50 °C. The particles were mixed until an even coating was observed on the particles. Magnesium oxide was added to the rotating drum as a powder with a variable rate. A batch of particles was coated with 1.3 weight% of magnesium oxide, a second batch with 2.6 weight% of magnesium oxide and a third batch with 5.2 weight% of magnesium oxide. The particles were mixed until the powder was evenly distributed on the particles. Finally, nBTPT was added to the drum as a powder. The three batches received the same nBTPT content: 500 ppm.
Comparative samples were prepared: the same homogeneous particles comprising 23 weight% of ammonium sulphate and 77 weight% of urea were coated with 0.1 weight% of magnesium sulphate, 0.025 weight% of magnesium oxide, and 0.05 weight% of nBTPT. Magnesium sulphate is another compound that is known to stabilize nBTPT in compositions comprising urea and ammonium sulphate.
The particles were stored at ambient temperature and humidity in a warehouse in the Netherlands, and the nBTPT content of the particles was regularly measured. The results are presented in Figure 1. It can be seen that the nBTPT in the particles according to the present invention, is much more stable than in the particles only coated with the stabilizers and nBTPT.

## Claims

1. A solid, particulate composition comprising a core comprising urea, and a solid layer at least partially covering the core, wherein the layer comprises a reaction product of an inorganic acid with a compound selected from the group consisting of oxides, carbonates, hydroxides, acetates and any mixture thereof, and a urease inhibitor of the type triphosphoric triamide.

2. The solid, particulate composition according to claim 1, wherein the inorganic acid is selected from the group consisting of nitric acid, sulphuric acid, phosphoric acid, urea sulphate, urea phosphate, and any mixture thereof.

3. The solid, particulate composition according to claim 1 or 2, wherein the solid, particulate composition comprises from 0.1 to 2.0 weight% of the inorganic acid, in particular of urea sulphate.

4. The solid, particulate composition according to any one of claims 1 to 3, wherein the compound selected from the group consisting of oxides, carbonates, hydroxides, acetates and any mixture thereof, is selected from the group consisting of zinc oxide, zinc carbonate, zinc hydroxide, zinc acetate, calcium oxide, calcium carbonate, calcium hydroxide, calcium acetate, magnesium oxide, magnesium carbonate, magnesium hydroxide, magnesium acetate, and any mixture thereof.

5. The solid, particulate composition according to any one of claims 1 to 4, wherein the solid, particulate composition comprises from 0.01 to 5.0 weight% of the compound selected from the group consisting of oxides, carbonates, hydroxides, acetates and any mixture thereof.

6. The solid, particulate composition according to any one of claims 1 to 5, wherein the solid, particulate composition comprises from 0.001 to 1.0 weight% of the urease inhibitor of the type phosphoric triamide.

7. The solid, particulate composition according to any one of claims 1 to 6, wherein the urease inhibitor is a compound of formula : 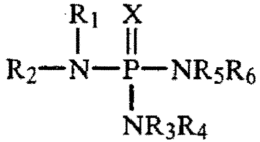 wherein :
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
R₃, R₄, R₅ and R₆ are individually hydrogen or alkyl having 1 to 6 carbon atoms, in particular wherein the urease inhibitor is N-(n-butyl) thiophosphoric triamide.

8. The solid, particulate composition according to any one of claims 1 to 7, wherein the solid, particulate composition comprises elemental sulphur and/or sulphate ions, in particular ammonium sulphate, in particular from 0.1 to 40 weight% of elemental sulphur and/or sulphate ions.

9. The solid, particulate composition according to any one of claims 1 to 8, wherein the weight ratio of inorganic acid to the compound selected from the group consisting of oxides, carbonates, hydroxides, acetates and any mixture thereof, is from 1:10 to 10:1, in particular 1:10 to 1:1.

10. A method for producing a solid, particulate composition comprising the steps of:
a) providing a particle comprising urea;
b) applying an inorganic acid, in particular wherein the inorganic acid is selected from the group consisting of nitric acid, sulphuric acid, phosphoric acid, urea sulphate, urea phosphate and any mixture thereof, on the particle comprising urea provided in step a), thereby obtaining a particle comprising urea and coated with an inorganic acid;
c) applying a compound selected from the group consisting of oxides, carbonates, hydroxides, acetates and any mixture thereof, to the particle obtained in step b);
d) applying a urease inhibitor of the type triphosphoric triamide, in particular N-(n-butyl) thiophosphoric triamide, to the particle obtained in step c).

11. The method according to claim 10, further comprising the step of heating the inorganic acid, in particular urea sulphate, to at least 40 °C before applying it on the particle comprising urea.

12. The method according to claim 10 or 11, wherein, in step d), the urease inhibitor is applied in solid, particulate form.

13. The method according to any one of claims 10 to 12, wherein the compound selected from the group consisting of oxides, carbonates, hydroxides, acetates and any mixture thereof, is selected from the group consisting of zinc oxide, zinc carbonate, zinc hydroxide, zinc acetate, calcium oxide, calcium carbonate, calcium hydroxide, calcium acetate, magnesium oxide, magnesium carbonate, magnesium hydroxide, magnesium acetate, and any mixture thereof.

14. The method according to any one of claims 10 to 13, wherein particle provided in step a) further comprises elemental sulphur and/or sulphate ions, in particular ammonium sulphate, in particular from 0.1 to 40 weight% of elemental sulphur and/or sulphate ions.

15. Use of the solid, particulate composition according to any one of claims 1 to 9 as a fertilizer.
